# NOUVEAU FASCICULE DE BREVET EUROPEEN

(11) **EP 1 903 647 B2**
(45) Date de publication et mention de la décision concernant l'opposition: **19.07.2017**
(45) Mention de la délivrance du brevet: 13.11.2013
(21) Numéro de dépôt: 07291067.2
(22) Date de dépôt: 05.09.2007
(51) Int. Cl.: H02B 1/20

(54) **Ensemble de distribution comportant des appareils électriques au format modulaire**
Verteilereinheit, die elektrische Geräte im Modulformat umfasst
Distribution assembly comprising electrical appliances in modular format

(30) Priorité: 21.09.2006 FR 0653877
(43) Date de publication de la demande: 26.03.2008
(73) Titulaire: Legrand France, 87000 Limoges (FR); Legrand SNC, 87000 Limoges (FR)
(72) Inventeur: Gaymard, Gilles, 06200 Nice (FR)
(74) Mandataire: Santarelli

(56) Documents cités:
- EP-A1- 0 729 167
- DE-A1- 4 322 535
- DE-A1- 19 547 557
- DE-C2- 19 626 390
- DE-T2- 69 002 662
- DE-T2- 69 008 139
- DE-T2- 69 602 218
- DE-U1- 29 719 177
- "Clipline 2005" Extrait du cataloque de la societé Phoenix Contact GmbH

## Description

### DOMAINE DE L'INVENTION

L'invention a trait aux ensembles de distribution pour installation électrique.

### ARRIERE-PLAN TECHNOLOGIQUE

On connaît déjà de tels ensembles qui comportent une pluralité d'appareils électriques au format modulaire.

On sait que de tels appareils sont globalement parallélépipédiques avec deux faces principales et des faces latérales s'étendant de l'une à l'autre des faces principales, la largeur d'un tel appareil, c'est-à-dire l'écart entre ses deux faces principales, étant égale à un nombre entier d'une largeur de base appelée « module » qui est de l'ordre de 18 mm.

On sait également que les appareils modulaires sont prévus pour appartenir à une rangée où ils sont disposés côte-à-côte en étant fixés par l'arrière sur un rail de support disposé horizontalement.

L'une des faces latérales, en général la face supérieure, présente au moins un orifice donnant accès à une borne adaptée à recevoir une dent d'un peigne de répartition horizontale prévu pour être disposé vis-à-vis dudit appareil suivant une direction gauche-droite.

Dans ces peignes, les dents sont disposées suivant un pas (entraxe entre deux dents successives) qui est égal à 1 module.

Le document EP 0 729 167 décrit un ensemble selon le préambule de la revendication 1.

### OBJET DE L'INVENTION

L'invention vise à améliorer les conditions de coopération des appareils modulaires avec de tels peignes.

Elle propose à cet effet un ensemble de distribution pour installation électrique selon la revendication 1.

Bien entendu, pour chaque appareil à 1 module, le décalage suivant la direction gauche-droite entre les deux orifices individuels d'accès est de l'ordre de 0,5 module tandis que l'écart entre chaque orifice individuel et la face latérale la plus proche est de l'ordre de 0,25 module.

Les valeurs de l'ordre de 0,5 module et 0,25 module qui viennent d'être mentionnées constituent de simples repères non limitatifs puisque les variations permises autour de ces valeurs repères ne dépendent pas des seules caractéristiques des appareils pris individuellement, mais à la fois des caractéristiques des différents appareils et des caractéristiques du peigne.

L'ensemble selon l'invention offre l'avantage, avec un peigne conventionnel au pas de 1 module, de permettre la présence d'appareils ayant une largeur de 0,5 module, ou d'ailleurs d'un nombre entier de fois 0,5 module, et ne constituant pas un obstacle pour les dents du peigne. Un tel appareil est par exemple un auxiliaire de signalisation d'une largeur de 0,5 module à associer à un disjoncteur. Il peut encore s'agir d'un télérupteur ayant une largeur de 1 ou de 1,5 module.

Par ailleurs, pour revenir aux appareils à couple(s) de bornes, du fait qu'ils comportent deux bornes pour chaque dent du peigne, l'ensemble selon l'invention offre des possibilités étendues pour procéder à des repiquages en vue d'alimenter un autre ensemble d'appareils, chaque borne ne recevant pas une dent du peigne pouvant être utilisée pour opérer un tel repiquage.

Selon des caractéristiques de mise en oeuvre préférée, pour des raisons de simplicité, de commodité et d'économie :
- pour au moins un dit appareil à 1 module, lesdites deux bornes dudit couple comportent chacune une pince individuelle comportant chacune un tronçon intermédiaire raccordé à l'autre pince individuelle par un pontet;
- à chaque pince individuelle est associé un ressort;
- chaque dite pince individuelle est en forme générale de lyre et est associée à un ressort à forme générale en C l'entourant étroitement ; et/ou
- pour au moins un dit appareil à 1 module, ledit couple est formé par une double borne comportant un ensemble monobloc formé par une double pince et par un pavé de montage et de raccordement.

De préférence, ledit couple d'orifices et ledit couple d'orifices supplémentaires sont disposés l'un derrière l'autre avec un simple décalage vers l'arrière, sans décalage selon une direction gauche-droite.

Il s'agit par exemple d'un disjoncteur bipolaire.

Selon d'autres caractéristiques préférées, qui conviennent particulièrement bien à une installation triphasée, ladite pluralité d'appareils comporte, en outre desdits appareils à 1 module, au moins un appareil d'une largeur d'au moins 2 modules et comportant autant de couples de deux dites bornes que sa largeur comporte de modules, un dit orifice étant prévu individuellement pour chaque borne de chaque dit couple, lesquels orifices individuels sont alignés suivant ladite direction gauche-droite et sont disposés tant les uns par rapport aux autres que vis-à-vis de l'une et l'autre des faces principales, de sorte que si l'on forme avec lesdits appareils à 1 module et avec ledit appareil à au moins 2 modules une rangée où ils sont disposés face principale contre face principale, sauf pour deux dits appareils à 1 module ou à au moins 2 modules qui sont distants de 0,5 module entre faces principales, ledit peigne peut être mis en place dans ladite rangée, certains appareils à 1 module ou à au moins 2 modules recevant une dent dans un dit orifice individuel donnant accès à une borne située à gauche dans ledit couple et les autres appareils dans un dit orifice individuel donnant accès à une borne située à droite dans ledit couple.

De préférence, l'appareil comporte trois couples de dits orifices ainsi qu'un couple d'orifices supplémentaires, situé en arrière desdits trois couples, donnant accès à un couple supplémentaire de bornes électriquement au même potentiel et disposées côte-à-côte ; et par exemple une ouverture allongée alignée avec ledit couple d'orifices supplémentaires.

Il s'agit par exemple d'un disjoncteur tétrapolaire.

Selon d'autres caractéristiques de mise en oeuvre préférée, pour les raisons exposées ci-dessus :
- l'ensemble, selon l'invention, comporte, en outre de la dite pluralité d'appareils au format modulaire, au moins un appareil, ayant une largeur égale à un nombre entier de fois 0,5 module et comportant un creux adapté à loger au moins une dent dudit peigne de sorte que si l'on forme ladite rangée également avec ledit appareil à un nombre entier de fois 0,5 module, ledit peigne peut être mis en place dans cette rangée.

Il s'agit par exemple d'un auxiliaire ayant une largeur de 0,5 module ou encore d'un télérupteur ayant une largeur de 1 module.

Selon d'autres caractéristiques de mise en oeuvre préférée, pour des raisons de simplicité et de commodité :
- l'ensemble selon l'invention comporte, en outre de ladite pluralité d'appareils électriques au format modulaire, au moins un appareil électrique d'extrémité adapté à recevoir des dents d'extrémité dudit peigne ;
- ledit appareil d'extrémité d'extrémité comporte un couple d'orifices donnant accès à un couple de bornes électriquement au même potentiel et disposées côte-à-côte, lesquels orifices sont disposés l'un par rapport à l'autre et vis-à-vis d'au moins une face principale, de façon semblable aux dits orifices des dits appareils à 1 module ;
- ledit appareil d'extrémité présente un couple d'orifices supplémentaires donnant accès à un couple supplémentaire de bornes électriquement au même potentiel et disposées côte-à-côte ; et/ou
- ledit couple d'orifices et ledit couple d'orifices supplémentaires sont disposés l'un derrière l'autre avec un simple décalage vers l'arrière, sans décalage selon une direction gauche-droite.

Il s'agit par exemple d'un interrupteur différentiel ou encore d'un adaptateur de raccordement par peigne présentant une semelle saillant de l'une de ses faces principales en partie inférieure et munie de dents prévues pour être introduite dans des bornes à vis situées en partie inférieure d'un autre appareil.

De préférence encore, pour des questions de simplicité et de commodité de mise en oeuvre de la distance d'isolation dans l'air, ledit appareil d'extrémité comporte une cloison saillante d'isolement à proximité des orifices de réception des dites dents d'extrémité dudit peigne.

### BREVE DESCRIPTION DES DESSINS

L'exposé de l'invention sera maintenant poursuivi par la description détaillée d'exemples préférés de réalisation, donnée ci-après à titre illustratif et non limitatif, en référence aux dessins annexés. Sur ceux-ci :
- la figure 1 est une vue en perspective d'un disjoncteur modulaire bipolaire prévu pour faire partie d'un ensemble conforme à l'invention :
- la figure 2 est une vue en perspective d'une double borne à insertion que comporte ce disjoncteur ;
- la figure 3 est une vue en perspective de l'autre double borne à insertion de ce disjoncteur, les ressorts associés aux pinces individuelles n'étant pas représentés ;
- la figure 4 est une vue en perspective d'un ensemble de distribution conforme à l'invention, pour installation électrique monophasée, formé par deux peignes de répartition conventionnels, par un rail de support à profil en Ω normalisé et par une rangée d'appareils électriques au format modulaire, sauf pour deux appareils qui présentent une largeur de 0,5 module, les appareils de cette rangée étant montrés en place sur le rail, les peignes étant montrés à l'écart de la rangée d'appareils ;
- la figure 5 est une vue semblable à la figure 4, mais avec les peignes en place dans la rangée d'appareils ;
- la figure 6 est une vue en perspective montrant un adaptateur de raccordement bipolaire prévu pour faire partie d'un ensemble conforme à l'invention ;
- les figures 7 et 8 sont des vues en perspective semblables aux figures 4 et 5, mais pour un ensemble de distribution pour installation électrique triphasée et avec un peigne de répartition horizontale tétrapolaire ;
- la figure 9 est une vue en perspective d'un appareil (bloc différentiel adaptable) que comporte l'ensemble illustré sur les figures 7 et 8, cet appareil servant à la fois de déclencheur différentiel et d'adaptateur de raccordement par peigne tétrapolaire de répartition horizontale ; et
- la figure 10 est une vue en perspective d'un adaptateur simple de raccordement par peigne tétrapolaire de répartition horizontale, jouant le même rôle que l'appareil illustré sur la figure 9, mais sans servir de déclencheur différentiel et sans offrir de bornes à vis de repiquage en partie basse.

### DESCRIPTION DETAILLEE D'UN EXEMPLE DE REALISATION

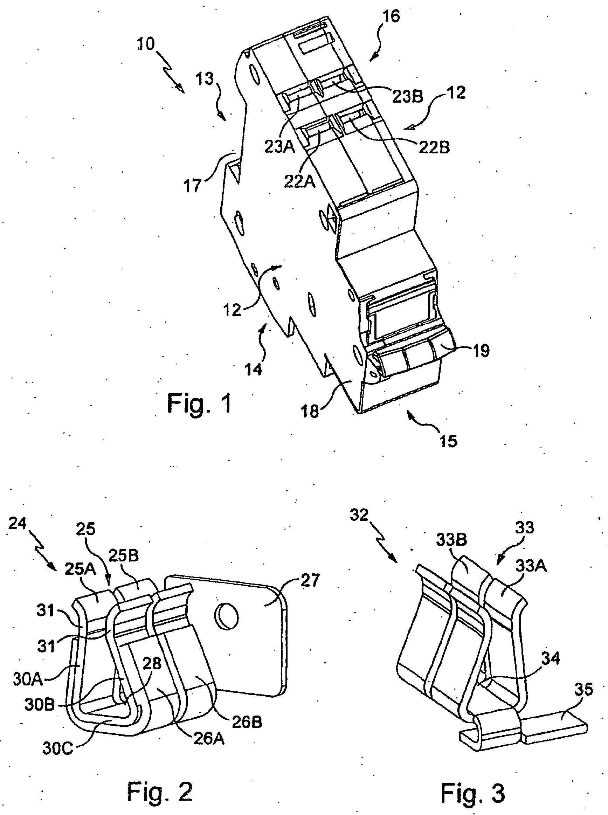

Le disjoncteur modulaire bipolaire 10 illustré sur la figure 1 a une forme globalement parallélépipédique.

Il présente deux faces principales 12 et des faces latérales s'étendant de l'une à l'autre des faces principales 12, à savoir une face arrière 13, une face inférieure 14, une face avant 15 et une face supérieure 16.

Conformément au format modulaire, l'écart entre ses deux faces principales 12 est égal à un nombre entier d'une largeur de base connue sous le nom de « module », qui est de l'ordre de 18 mm. Ici la largeur du disjoncteur 10 est de 1 module.

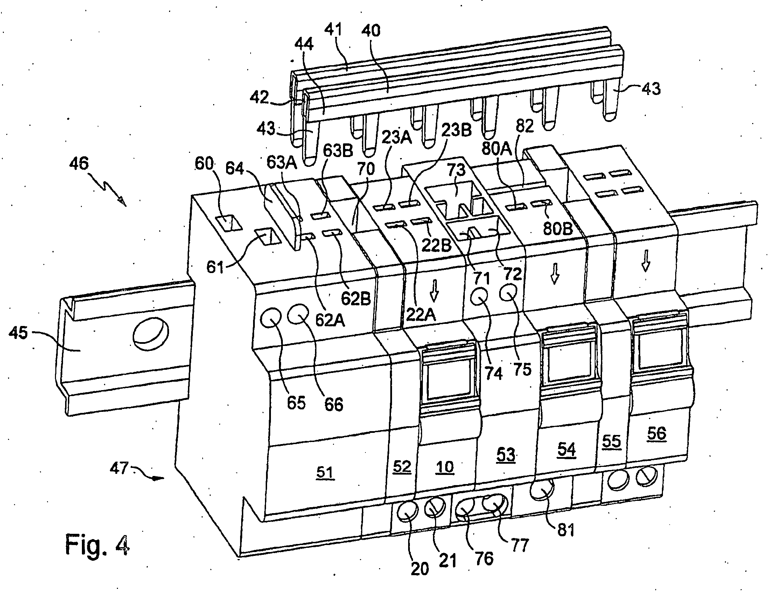

La face arrière 13 présente une échancrure 17 pour le montage du disjoncteur 1 sur un rail normalisé à profil en Ω tel que le rail 45 illustré sur la figure 4.

La face inférieure 14 présente deux orifices d'accès à des bornes à vis non visibles sur les dessins.

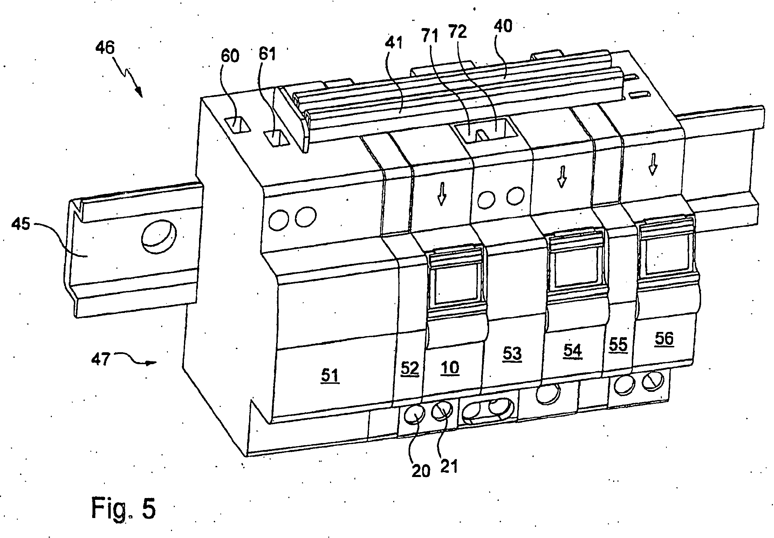

La face avant 15 présente, en position centrale, sur à peu près la moitié de sa longueur, un nez 18 présentant un levier de manoeuvre 19. Sous le nez 18 se trouvent deux orifices 20 et 21 (figures 4 et 5) permettant chacun d'accéder à la tête de la vis de l'une des bornes pour lesquelles un orifice d'accès est ménagé dans la face inférieure 14.

La face supérieure 16 présente deux couples d'orifices 22A, 22B et 23A, 23B donnant chacun accès à une respective des deux doubles bornes à insertion que comporte le disjoncteur 10.

On va maintenant décrire plus particulièrement, à l'appui de la figure 2, la double borne à insertion 24 à laquelle donnent accès les orifices 22A, 22B.

La double borne 24 comporte une double pince 25 comportant deux pinces individuelles 25A, 25B, deux ressorts 26A, 26B et un pavé de montage et de raccordement 27.

La double pince 25 est en matériau bon conducteur de l'électricité, ici en cuivre étamé.

Les pinces individuelles 25A et 25B sont ici identiques. La description donnée ci-après pour la borne 25A vaut donc également pour la borne 25B.

La pince 25A est en forme générale de lyre. Elle présente deux tronçons latéraux 30A et 30B se raccordant chacun par une extrémité à une extrémité respective d'un tronçon intermédiaire 30C globalement rectiligne. Les tronçons 30A et 30B sont légèrement dissymétriques, le tronçon 30A étant moins incurvé que le tronçon 30B.

A partir de leur extrémité opposée au tronçon intermédiaire 30C, c'est-à-dire à partir de leur extrémité distale, les tronçons 30A et 30B se rapprochent l'un de l'autre jusqu'à une zone d'inflexion 31 où ils sont les plus proches l'un de l'autre.

Entre la zone d'inflexion 31 et le tronçon intermédiaire 30C, les tronçons 30A et 30B s'écartent l'un de l'autre, chaque tronçon ayant dans cette partie une conformation qui est ici relativement rectiligne.

Les ressorts 26A et 26B sont ici identiques. La description donnée ci-après pour le ressort 26A vaut donc également pour le ressort 26B.

Le ressort 26A est en matériau métallique présentant une bonne élasticité, ici en acier à ressort. Il a une forme générale en C. Il entoure étroitement la portion de la pince individuelle 25A comportant le tronçon intermédiaire 30C et la partie de chacun des tronçons 30A et 30B située entre le tronçon 30C et la zone d'inflexion 31, les extrémités du ressort 26A portant chacune contre la face externe de l'un des tronçons 30A et 30B à proximité de la zone d'inflexion 31.

Les pinces individuelles 25A et 25B ainsi que le pavé 27 sont faits d'une seule pièce. Les pinces individuelles 25A et 25B se raccordent l'une à l'autre par un pontet 28 s'étendant d'une des tranches du tronçon intermédiaire 30C de la pince 25A à l'une des tranches du tronçon intermédiaire de la pince 25B.

Le pavé 27 se raccorde à la tranche du tronçon intermédiaire de la pince 25B située à l'arrière sur la figure 2.

Le pavé 27 est plat et s'étend suivant un plan parallèle à ceux suivant lesquels sont globalement orientées les pinces individuelles 25A, 25B et les ressorts 26A, 26B.

Le pavé 27 est disposé, par rapport au tronçon intermédiaire 30C, du même côté que les tronçons 30A et 30B, c'est-à-dire qu'il est disposé du côté que l'on voit en haut sur la figure 2.

Le pavé 27 permet d'opérer la fixation mécanique de la double borne 24 dans le disjoncteur 10 et le raccordement électrique de la double borne 24 au circuit interne au disjoncteur 10.

La double borne 24 est disposée dans le disjoncteur 10 avec les plans suivant lesquels sont globalement orientées les pinces 25A et 25B qui sont parallèles aux faces principales 12, les extrémités distales des tronçons 30A et 30B étant situées à proximité de la face supérieure 16, l'espace entre les tronçons 30A et 30B de la pince 25A étant aligné avec l'orifice 22A tandis que l'espace entre les tronçons 30A et 30B de la pince 25B est aligné avec l'orifice 22B.

La double borne 32 illustrée partiellement sur la figure 3 (les ressorts tels que 26A et 26B ne sont pas représentés) comporte une double pince 33 identique à la double pince 25 de la borne 24, comportant deux pinces individuelles 33A et 33B reliées par un pontet 34 semblable au pontet 28.

Le pavé de montage et de raccordement 35 de la borne 32 est conformé différemment du pavé 27 : il s'étend suivant un plan parallèle à celui suivant lequel s'étendent les tronçons intermédiaires 30C et est relativement étroit.

Les pavés 27 et 35 sont conformés en fonction de la disposition des éléments internes au disjoncteur 10, pour optimiser le raccordement des bornes 24 et 32.

Chacune des doubles bornes 24 et 32 constitue deux bornes d'entrée pour l'un des pôles d'une source de courant alternatif, ici un pôle de neutre et un pôle de phase.

Les bornes à vis auxquelles donnent accès les orifices situés dans la face inférieure 14 et dont la commande s'effectue par les orifices 20 et 21 de la face avant 15 sont quant à elles des bornes de sortie vers une portion d'une installation électrique protégée par le circuit interne du disjoncteur 10.

Ce circuit interne, lorsque le disjoncteur 10 est enclenché, raccorde la double borne à insertion 32 à laquelle donnent accès les orifices 23A et 23B à la borne dont la vis peut être commandée par l'orifice 20 tandis qu'il raccorde la double borne à insertion 24 à laquelle donnent accès les orifices 22A et 22B à la borne dont la vis peut être commandée par l'orifice 21.

L'alimentation du disjoncteur 10 est prévue pour être effectuée par deux peignes unipolaires de répartition horizontale conventionnels, portés respectivement au potentiel de phase et au potentiel de neutre, tels que les peignes 40 et 41 représentés sur les figures 4 et 5.

Comme on le voit plus particulièrement sur la figure 4, les peignes 40 et 41 sont ici identiques. La description donnée ci-après pour le peigne 40 vaut donc également pour le peigne 41.

Le peigne 40 comporte une longrine 42 en forme de bande continue à partir de laquelle saille une pluralité de dents 43, ici au nombre de 6.

La longrine 42 et les dents 43 sont faites d'une seule pièce dans une matière métallique bonne conductrice de l'électricité.

La longrine 42 et les dents 43 sont ici orientées suivant un même plan. Les dents 43 sont régulièrement réparties suivant un pas (entraxe entre deux dents consécutives) correspondant à la distance normalisée connue sous le nom « module », qui est de l'ordre de 18 mm.

Le peigne 40 comporte, en outre de la longrine 42 et des dents 43, une enveloppe 44 en matière isolante à profil en U qui recouvre la longrine 42 de sa tranche opposée aux dents 43 jusqu'à la racine des dents 43.

Entre deux dents 43, la tranche de la longrine 42 est rectiligne et située au même niveau que la tranche de l'enveloppe 44.

La double borne 24 est prévue pour recevoir une dent telle que 43 dans l'une ou l'autre, ou d'ailleurs dans chacune, des pinces individuelles 25A et 25B, par simple insertion, avec bien entendu l'insertion qui se fait du côté de l'extrémité distale des tronçons 30A et 30B et le peigne qui est orientée transversalement à la double borne, c'est-à-dire suivant une direction gauche-droite.

La conformation de la double borne 24 et des dents 43 est telle qu'après insertion, la dent est fortement enserrée par la pince individuelle 25A ou 25B au niveau des zones d'inflexion 31, de sorte qu'il s'établit un bon contact électrique.

Les orifices 22A, 22B et 23A, 23B ménagés dans la face supérieure 16 du disjoncteur 10 permettent chacun à une dent telle que 43 d'accéder à la double borne à insertion 24 ou 32 située juste en-dessous.

La double borne 24 forme ainsi deux bornes 25A, 26A et 25B, 26B électriquement au même potentiel et disposées côte-à-côte avec l'orifice 22A donnant accès à la borne 25A, 26A et l'orifice 22B donnant accès à la borne 25B, 26B qui sont alignés suivant la direction gauche-droite.

De même que les bornes 25A, 26A et 25B, 26B, les orifices 22A et 22B sont alignés suivant la direction gauche-droite et présentent l'un par rapport à l'autre un décalage suivant la direction gauche-droite, l'orifice 22A étant situé du côté gauche et l'orifice 22B du côté droit.

Le décalage entre les orifices 22A et 22B, qui correspond au décalage entre les bornes 25A, 26A et 25B, 26B, est de l'ordre de 0,5 module. L'écart entre l'orifice 22A et la face principale 12 de gauche (face principale située du côté de cet orifice) est de l'ordre de 0,25 module. De même, l'écart entre l'orifice 22B et la face principale de droite est de l'ordre de 0,25 module.

Ainsi, si l'on disposait côte-à-côte un ensemble de disjoncteurs tels que 10, les orifices tels que 22A et 22B seraient alignés avec le décalage entre deux orifices successifs qui serait toujours de l'ordre de 0,5 module, que ces orifices appartiennent à un même disjoncteur ou à deux disjoncteurs voisins.

La description qui précède pour les orifices 22A et 22B vis-à-vis de la double borne 24 vaut également pour les orifices 23A et 23B vis-à-vis de la double borne 32, ces derniers présentant un simple décalage vers l'arrière (sans décalage suivant la direction gauche-droite) par rapport respectivement à l'orifice 22A, à l'orifice 22B et à la double borne 24.

Lorsque plusieurs disjoncteurs tels que 10 sont disposés côte-à-côte sur un même rail, par exemple le rail 45 montré sur les figures 4 et 5, les dents d'un même peigne, par exemple le peigne 40, peuvent être introduites dans les orifices tels que 22A des différents disjoncteurs et les dents d'un autre peigne, par exemple le peigne 41, peuvent être introduites dans les orifices tels que 23A des différents disjoncteurs, le peigne 40 étant en avant du peigne 41.

Il est également possible d'introduire les dents d'un peigne tel que 40 dans les orifices tels que 22B et les dents d'un peigne tel que 41 dans les orifices tels que 23B, ou d'introduire les dents d'un peigne tel que 40 dans les orifices tels que 22A et les dents d'un peigne tel que 41 dans les orifices tels que 23B, ou encore d'introduire les dents d'un peigne tel 40 dans les orifices tels que 22B et les dents d'un peigne tel que 41 dans les orifices tels que 23A.

Ce qui précède vaut également si les appareils disposés côte-à-côte ne sont pas des disjoncteurs 10, mais d'autres appareils modulaires présentant une face supérieure similaire à la face 16, et en tout cas avec des orifices d'accès disposés de la même manière.

Dans l'ensemble 46 illustré sur les figures 4 et 5, la rangée 47 d'appareils montés sur le rail 45 comporte, à partir de l'extrémité que l'on voit à gauche, un interrupteur différentiel bipolaire 51, un auxiliaire de signalisation 52, le disjoncteur bipolaire 10, auquel est associé l'auxiliaire 52, un télérupteur 53, un disjoncteur unipolaire 54, un autre auxiliaire de signalisation 55 et un autre disjoncteur bipolaire 56, auquel est associé l'auxiliaire de signalisation 55.

Tout comme le disjoncteur 10, l'interrupteur différentiel 51 est au format modulaire, mais alors que le disjoncteur 10 présente une largeur (écart entre les faces principales 12) égale à 1 module (environ 18 mm), l'interrupteur différentiel 51 présente une largeur de 2 modules (environ 36 mm).

L'interrupteur différentiel 51 présente, sur sa face supérieure, deux ouvertures 60 et 61 donnant chacune accès à une borne à vis d'entrée pour un câble d'arrivée de courant et deux couples d'orifices 62A, 62B et 63A, 63B donnant chacun accès à une double borne à insertion telle que les bornes 24 et 32, pour le départ du courant, ces deux doubles bornes à insertion étant prévues pour recevoir respectivement une dent d'extrémité d'un peigne tel que 40 et une dent d'extrémité d'un peigne tel que 41.

Les couples d'orifices 62A, 62B et 63A, 63B ont des caractéristiques de positionnement semblables à celles des couples d'orifices 22A, 22B et 23A, 23B, que ce soit pour le positionnement de ces orifices les uns vis-à-vis des autres que pour le positionnement de ces orifices par rapport à la face principale de droite de l'interrupteur différentiel 51.

Entre, d'une part, les ouvertures 60 et 61 et, d'autre part, les couples d'orifices 62A, 62B et 63A, 63B, il saille de la face supérieure de l'interrupteur différentiel 51 une cloison 64 pour isoler les câbles d'arrivée de courant et les peignes tels 40 et 41.

Pour la commande des vis des bornes auxquelles donnent accès respectivement l'ouverture 60 et l'ouverture 61, il est prévu dans la face avant de l'interrupteur différentiel 51 des orifices respectifs 65 et 66.

Ici, les bornes auxquelles donnent accès l'ouverture 60 et le couple d'orifices 63A, 63B sont prévues pour le pôle de neutre tandis que les bornes auxquelles donnent accès l'ouverture 61 et le couple d'orifices 62A, 62B sont prévues pour le pôle de phase.

Ainsi, le peigne 41 que l'on voit en arrière sur les figures 4 et 5 est porté au pole de neutre par l'interrupteur 51 et répartit ce pôle entre les appareils de la rangée 47. Le peigne 40 que l'on voit à l'avant est porté au pole de phase par l'interrupteur 51 et répartit ce pole entre les appareils de la rangée 47.

L'auxiliaire de signalisation 52 associé au disjoncteur 10 présente une largeur de 0,5 module (environ 9 mm).

Pour permettre la mise en place des peignes 40 et 41, l'auxiliaire 52 présente dans sa face supérieure un creux 70 conformé en créneau.

Le télérupteur 53 présente une largeur de 1 module (environ 18 mm). Il présente dans sa face supérieure deux ouvertures 71 et 72 donnant chacune accès à une borne à vis pour le raccordement d'un câble, les ouvertures 71 et 72 étant disposées à l'extrême avant de la face supérieure du télérupteur 53. En arrière des ouvertures 71 et 72, la partie supérieure du télérupteur 53 présente un creux 73 dans lequel s'étendent de petites nervures d'isolation.

Pour la commande des vis des bornes auxquelles donnent accès les ouvertures 71 et 72, la face avant du télérupteur 53 comporte au-dessus de son nez deux orifices 74 et 75 permettant de commander respectivement la vis de la borne à laquelle donne accès l'ouverture 71 et la vis de la borne à laquelle donne accès l'ouverture 72.

La partie inférieure du télérupteur 53 comporte deux bornes à vis pour un câble auxquels donnent accès des ouvertures non visibles pratiquées dans la face inférieure, la face avant présentant sous le nez du télérupteur 53 deux orifices 76 et 77 donnant accès chacun à la vis de l'une et de l'autre de ces bornes.

Le disjoncteur 54 est semblable au disjoncteur 10, si ce n'est qu'il est unipolaire (il est prévu pour un seul pôle de phase).

En conséquence, le disjoncteur 54 présente dans sa face supérieure un seul couple d'orifices 80A, 80B donnant accès à un double borne à insertion d'arrivée tandis que sa face inférieure présente une seule ouverture donnant accès à une borne à vis de départ, cette vis pouvant être commandée par l'orifice 81 ménagé en bas de sa face avant.

En arrière des orifices 80A et 80B, la face supérieure du disjoncteur unipolaire 54 présente une ouverture 82 en forme de fente orientée suivant une direction gauche-droite et s'étendant de l'une à l'autre des faces principales du disjoncteur 54.

L'auxiliaire de signalisation 55 et le disjoncteur 56 sont identiques respectivement à l'auxiliaire 52 et au disjoncteur 10.

On observera que les orifices semblables au couple d'orifices 22A, 22B du disjoncteur 10 (orifices 62A, 62B de l'interrupteur 51 et orifices 80A, 80B du disjoncteur 54) sont alignés et, de même, que les orifices semblables au couple 23A, 23B (orifices 63A, 63B de l'interrupteur 51) sont alignés entre eux et avec l'ouverture 82, et qu'au surplus les creux 70 et 73 sont situés au même niveau que ces orifices, de sorte qu'ils peuvent loger des dents telles que 43 des peignes tels que 40 et 41.

Grâce à la présence des couples d'orifices tels que 22A, 22B et 23A, 23B, les auxiliaires de signalisation 52 et 55, qui introduisent un décalage de 0,5 module, ne gênent pas la mise en place des peignes tels que 40 et 41 dont les dents ont un pas égal à 1 module.

En effet, la dent 43 du peigne 40 située le plus à gauche peut s'introduire dans l'orifice 62A (orifice de gauche) de l'interrupteur 51, la dent suivante peut se loger dans le creux 70, la dent suivante peut s'introduire dans l'orifice 22B (orifice de droite) du disjoncteur 10, la dent suivante peut se loger à droite et à l'avant du creux 73, la dent suivante peut s'introduire dans l'orifice 80B du disjoncteur 54, et la dent suivante (dent le plus à droite) peut s'introduire dans l'orifice tel que 22A (orifice de gauche) du disjoncteur 56, vu le nouveau décalage de 0,5 module créé par l'auxiliaire 55.

De même, les dents du peigne 41 s'introduisent respectivement dans l'orifice 63A, dans l'orifice 70, dans l'orifice 23B, à droite et en arrière du creux 73, dans l'ouverture 82 et dans l'orifice tel que 23A du disjoncteur 56.

On voit ainsi que la présence des auxiliaires de signalisation 52 et 55 n'introduit aucune difficulté à la mise en place des peignes conventionnels tels que 40 et 41.

On observera (voir la figure 5) que les peignes 40 et 41 laissent alors libres les orifices de la face supérieure du disjoncteur 56 situés à droite (orifices semblables aux orifices 22B et 23B du disjoncteur 10). De tels orifices peuvent être utilisés pour permettre par exemple un repiquage vers d'autres appareils.

On observera également que les peignes 40 et 41 ne masquent pas les ouvertures 71 et 72 du télérupteur 53 et ne gênent donc pas la mise en place des câbles devant être introduits par ces ouvertures.

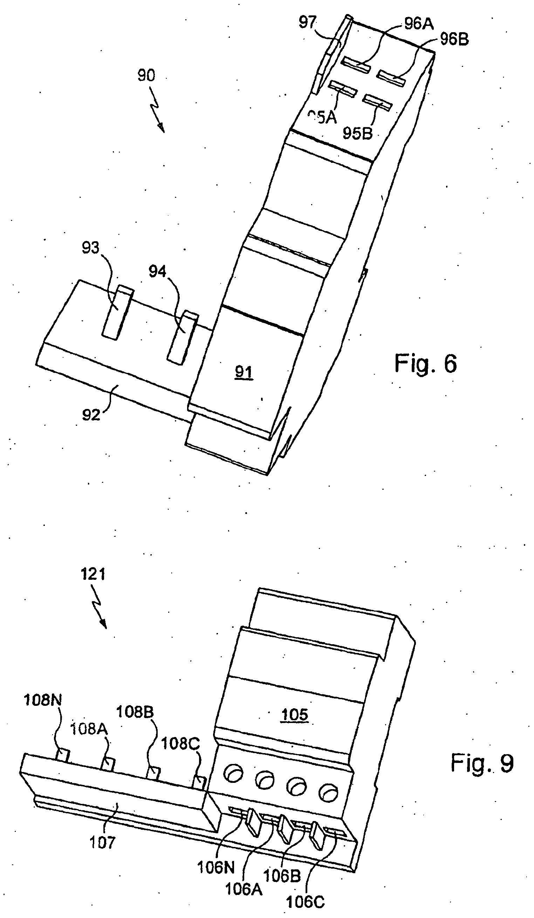

Il est possible de remplacer l'interrupteur différentiel 51 par l'association de l'adaptateur de raccordement bipolaire 90 illustré sur la figure 6 avec un interrupteur différentiel conventionnel ou un autre appareil de tête de groupe, présentant dans sa face supérieure deux orifices pour l'introduction de câbles d'arrivée de courant et dans sa face inférieure deux orifices pour l'introduction des câbles de départ de courant.

L'adaptateur 90 comporte un corps 91 au format modulaire, ayant une largeur de 1 module et une semelle 92 saillant du corps 91 au-delà de sa face principale de gauche en partie inférieure, la semelle 92 présentant des dents 93 et 94 saillant verticalement au-dessus de sa face supérieure, ces dents étant prévues pour être introduites dans les ouvertures situées dans la face inférieure de l'interrupteur ou appareil de tête conventionnel auquel est associé l'adaptateur 90, la semelle 92 ayant, comme un tel appareil, une largeur de 2 modules tandis que l'écart entre les dents 93 et 94 est de 1 module.

La partie supérieure du corps 91 présente, tout comme l'interrupteur différentiel 51, deux couples d'orifices 95A, 95B et 96A, 96B donnant accès à des doubles bornes à insertion. Il saille de la face supérieure du corps 91, en bordure de la face principale de gauche, une cloison d'isolation 97.

Les couples d'orifices 95A, 95B et 96A, 96B ainsi que la cloison 97 jouent le même rôle que, respectivement, le couple d'orifices 62A, 62B, le couple d'orifices 63A, 63B et la cloison d'isolation 64.

La dent 93, située à gauche, est reliée par des conducteurs internes de l'adaptateur 90 à la double borne à insertion auxquels donnent accès les orifices 96A, 96B (pôle de neutre) tandis que la dent 94, située à droite, est reliée par des conducteurs internes de l'adaptateur 90 à la double borne auxquels donnent accès les orifices 95A, 95B (pôle de phase).

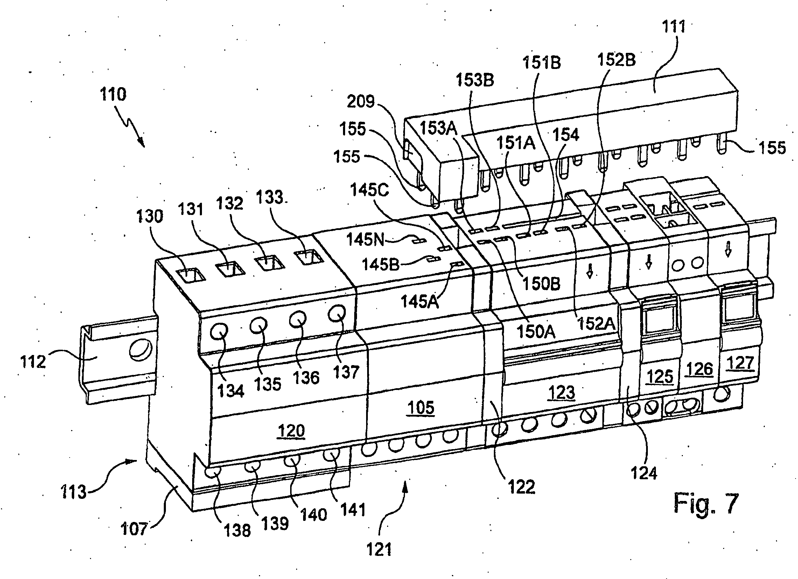

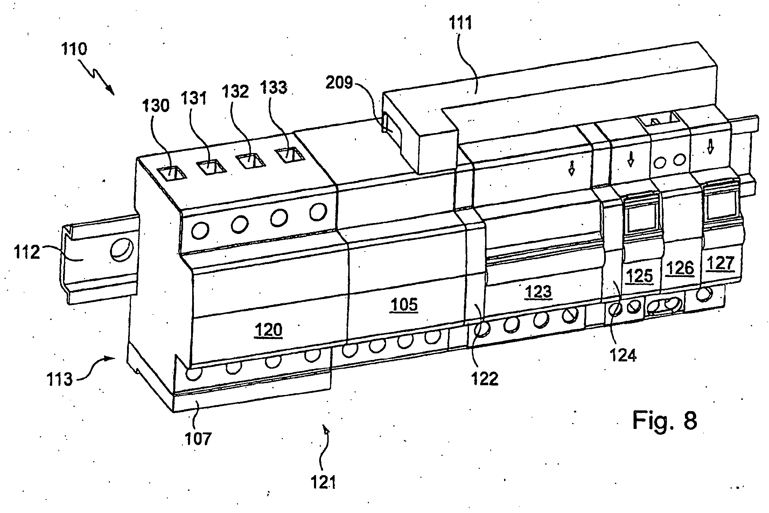

L'ensemble 110 illustré sur les figures 7 et 8 comporte un peigne trétapolaire 111, un rail de support 112 et une rangée 113 d'appareils électriques chacun au format modulaire, sauf pour les auxiliaires 122 et 124 qui présentent une largeur de 0,5 module.

Le peigne 111 est prévu pour répartir horizontalement, entre les appareils tels que ceux de la rangée 113, le pôle de neutre et les trois pôles de phase.

L'agencement des dents 155 du peigne 111 et des liaisons électriques entre ses dents sera décrit en détails ultérieurement.

Le rail 112 est identique au rail 45.

La rangée 113 comporte à partir de l'extrémité que l'on voit à gauche sur les figures 7 et 8, un disjoncteur tétrapolaire 120, un bloc différentiel adaptable 121, un auxiliaire de signalisation 122, un disjoncteur tétrapolaire 123, un auxiliaire de signalisation 124, un disjoncteur bipolaire 125, un télérupteur 126 et un disjoncteur unipolaire 127.

Le disjoncteur tétrapolaire 120 comporte dans sa face supérieure quatre ouvertures 130, 131, 132 et 133 donnant chacune accès à une borne à vis pour un câble d'arrivée de courant connecté à un réseau triphasé, les bornes à vis auxquelles donnent accès les ouvertures 130 à 133 étant respectivement prévues pour le câble de neutre, le câble de première phase, le câble de deuxième phase et le câble de troisième phase.

Pour la commande des vis des bornes auxquels donnent accès les orifices 130 à 133, le disjoncteur 120 présente au-dessus de son nez quatre orifices 134 à 137 donnant chacun accès à la vis d'une respective de ces bornes.

Dans sa partie inférieure, le disjoncteur 120 présente des bornes à vis pour des câbles de départ de courant, sa face avant présentant sous son nez des ouvertures 138 à 141 pour la commande des vis de ces bornes.

Le bloc différentiel adaptable 121 représenté de façon isolée sur la figure 9 comporte un corps 105 au format modulaire ayant une largeur de 3 modules.

La face supérieure du corps 105 présente (voir la figure 7) des orifices 145A, 145B, 145C et 145N donnant chacun accès à une borne à insertion simple prévue pour recevoir l'une des quatre dents d'extrémité de gauche du peigne 111.

Les orifices 145B et 145N sont disposés à gauche et alignés l'un avec l'autre suivant une direction avant-arrière. Les orifices 145A et 145C sont situés du côté droit et sont alignés l'un avec l'autre suivant une direction avant-arrière.

L'écart entre les orifices 145N et 145C suivant une direction gauche-droite est de 0,5 module (de l'ordre de 9 mm).

Du fait que l'orifice 145B et l'orifice 145N sont alignés l'un avec l'autre suivant une direction avant-arrière et que les orifices 145A et 145C sont alignés l'un avec l'autre d'une façon similaire, l'écart suivant une direction gauche-droite est également de 0,5 module entre l'orifice 145N et l'orifice 145A, entre l'orifice 145B et l'orifice 145C ainsi qu'entre l'orifice 145B et l'orifice 145A.

L'orifice 145N est celui qui est le plus en arrière. Il est prévu pour donner accès à une borne à insertion portée au pôle de neutre. Les orifices 145A, 145B et 145C donnent accès respectivement à une borne à insertion portée au pôle de première phase, au pôle de deuxième phase et au pôle de troisième phase.

Le corps 105 du bloc 121 présente dans sa face inférieure (voir la figure 9) des ouvertures 106N, 106A, 106B et 106C donnant chacune accès à une borne à vis de départ de courant.

Ces bornes à vis sont utiles par exemple pour des câbles de raccordement permettant d'alimenter, à partir de la rangée 113, une autre rangée d'appareils appartenant au même groupe protégé par le disjoncteur 120 et par le déclencheur différentiel logé dans le corps 105 du bloc 121.

Bien entendu, c'est au disjoncteur 120 qu'est associé le déclencheur différentiel logé dans le corps 105 : lorsque ce déclencheur différentiel détecte un défaut, il fait déclencher, par action mécanique, le disjoncteur 120 (comme tout déclencheur, le déclencheur logé dans le corps 105 n'a pas de contact interne).

En outre du corps 105, le bloc 121 comporte une semelle 107 saillant du corps 105 au-delà de la face principale de ce corps située à gauche et saillant légèrement vers le bas au-delà de la face inférieure du corps 105.

La semelle 107 présente des dents 108N, 108A, 108B et 108C prévues pour être introduites dans les ouvertures situées dans la face inférieure du disjoncteur 120 afin d'être disposées dans les bornes à vis de départ de ce dernier.

Les dents 108N, 108A, 108B et 108C sont reliées, au travers des éléments de protection contenus dans le corps 105, aux bornes à insertion auxquelles donnent accès respectivement l'orifice 145N, l'orifice 145A, l'orifice 145B et l'orifice 145C. Ces bornes à insertion sont reliées directement aux bornes à vis auxquelles donnent accès respectivement l'orifice 106N, l'orifice 106A, l'orifice 106B et l'orifice 106C.

Le disjoncteur tétrapolaire 123 a une largeur de 3 modules. Il présente dans sa face supérieure quatre couples d'orifices 150A, 150B ; 151A, 151B ; 152A, 152B ; et 153A, 153B ainsi qu'une ouverture allongée 154.

Les couples d'orifices 150A, 150B ; 151A, 151B ; et 152A, 152B donnent chacun accès à une double borne à insertion prévue pour l'alimentation du disjoncteur 123 par la première phase, par la deuxième phase et par la troisième phase tandis que le couple d'orifices 153A, 153B est prévu pour l'alimentation du disjoncteur 123 par le pôle de neutre.

Les couples d'orifices 150A, 150B et 153A, 153B sont disposés de la même façon que les couples d'orifices 22A, 22B et 23A, 23B du disjoncteur 10, tant les uns par rapport aux autres que par rapport à la face latérale telle que 12 située à gauche.

Les couples d'orifices 151A, 151B et 152A, 152B sont alignés avec le couple d'orifices 150A, 150B. Le décalage entre deux orifices voisins de l'ensemble d'orifices alignés 150A, 150B, 151A, 151 B, 152A, 152B est de l'ordre de 0,5 module. Le décalage entre chacun de ces orifices et l'une ou l'autre des faces principales telles que 12 est d'un nombre impair de fois 0,25 module.

L'ouverture allongée 154 est alignée avec les orifices 153A, 153B. Elle s'étend depuis le voisinage de l'orifice 153B jusqu'à la face latérale telle que 12 opposée.

Les auxiliaires de signalisation 122 et 124, le disjoncteur bipolaire 125, le télérupteur 126 et le disjoncteur unipolaire 127 sont identiques respectivement aux auxiliaires 52 et 55, au disjoncteur 10, au télérupteur 53 et au disjoncteur 54.

Les dents 155 du peigne tétrapolaire 111 comportent, à l'extrémité que l'on voit à gauche sur les figures 7 et 8, quatre dents disposées comme les orifices 145A, 145B, 145C et 145N, les autres dents étant disposées suivant deux rangées parallèles chacune orientée suivant une direction gauche-droite.

Les dents de chaque rangée sont disposées suivant un pas (entraxe entre deux dents consécutives) égal à 1 module. Les dents de la rangée située en avant sont décalées de 0,5 module vers la droite par rapport aux dents de la rangée située en arrière.

Les dents de la rangée située en arrière sont chacune prévues pour être portées au potentiel de neutre et sont donc chacune reliée électriquement à la dent d'extrémité prévue pour être introduite dans l'orifice 145N.

Les dents de la rangée située en avant sont prévues pour être portées successivement, de la gauche vers la droite, au pôle de première phase, au pôle de deuxième phase et au pôle de troisième phase, la première dent, la quatrième dent et ainsi de suite étant reliées à la dent d'extrémité prévue pour être introduite dans l'orifice 145A ; la deuxième dent, la cinquième dent et ainsi de suite étant reliées à la dent d'extrémité prévue pour être introduite dans l'orifice 145B ; et la troisième dent, la sixième dent et ainsi de suite étant reliées à la dent d'extrémité prévue pour être introduite dans l'orifice 145C.

Pour plus de détails sur le peigne 111, on pourra se reporter à la demande de brevet français 2 873 502.

La présence des auxiliaires de signalisation 122 et 124 n'introduit aucune difficulté d'insertion du peigne 111, les trois premières dents de la rangée située en avant s'introduisant respectivement dans les orifices 150A, 151A et 152A, la première dent de la rangée située en arrière s'introduisant dans le creux tel que 70 de l'auxiliaire 122, la deuxième dent dans l'orifice 153B et les troisième et quatrième dents dans la fente 154.

On observera, ainsi qu'il apparaît plus particulièrement sur la figure 8, que les ouvertures telles que 71 et 72 (figures 4 et 5) du télérupteur 126 (figures 7 et 8) ne sont pas masquées par le peigne 111, dont l'extrémité que l'on voit à gauche est coudée (la rangée de dents située à l'avant est au niveau de la dent d'extrémité prévue pour être introduite dans l'orifice 145C et la rangée de dents située en arrière est au même niveau que la dent d'extrémité prévue pour être introduite dans l'orifice 145N).

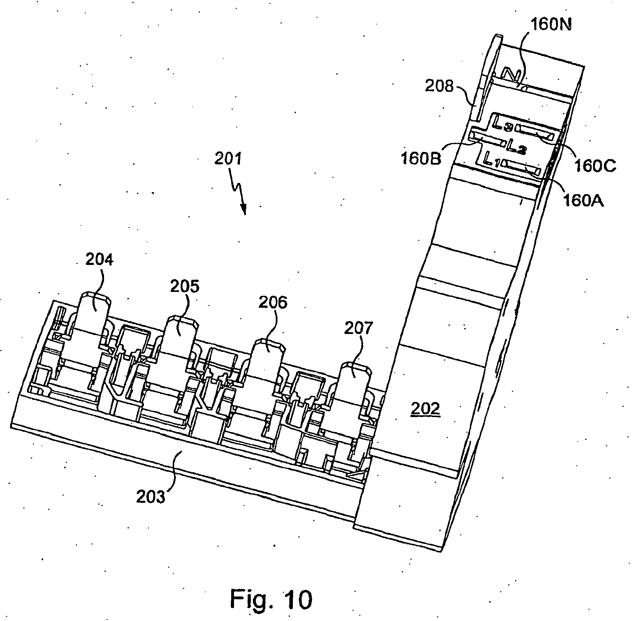

Dans les cas où la fonction du déclencheur différentiel est remplie par un autre appareil ou n'est pas utile tandis qu'il n'est point besoin de bornes à vis de repiquage, il est possible de remplacer le bloc 121 par l'adaptateur simple de raccordement par peigne trétapolaire 201 illustré sur la figure 10.

L'adaptateur 201 comporte un corps 202 au format modulaire, ayant une largeur de 1 module et une semelle 203 saillant du corps 202 au-delà de sa face principale de gauche légèrement vers le bas, la semelle 203 présentant des dents 204 à 207 saillant verticalement au dessus de sa face supérieure (il existe un capot non représenté qui ferme cette face supérieure), ces dents étant prévues pour être introduites dans les ouvertures situées dans la face inférieure d'un appareil de tête tel que le disjoncteur 120.

Les dents 204 à 207 sont alignées longitudinalement selon un pas (entraxe entre deux dents successives) constant, qui est ici de 1 module.

La face supérieure du corps 202 présente des orifices 160A, 160B, 160C et 160N disposés comme les orifices 145A, 145B, 145C et 145N du corps 105 du bloc différentiel adaptable 121.

Les dents 204 à 207 sont reliées respectivement, par des conducteurs internes à l'adaptateur 201, aux bornes à insertion auxquelles donnent accès l'orifice 160N, l'orifice 160A, l'orifice 160B et l'orifice 160C.

Une cloison d'isolation 208 saille de la face supérieure du corps 202 en bordure de la face principale de gauche. On observera (voir les figures 7 et 8) que le boîtier du peigne 111 comporte, sur sa face d'extrémité que l'on voit à gauche, un renfoncement 209 permettant d'accueillir la cloison 208.

On notera que dans les différents appareils décrits ci-dessus, les bornes de neutre sont disposées à gauche conformément aux pratiques de câblage de certains pays.

Dans des variantes non représentées, pour répondre aux pratiques de câblages d'autres pays, les bornes de neutres sont disposées à droite, les appareils étant modifiés en conséquence, par exemple, pour le disjoncteur 10, la double borne à insertion à laquelle donne accès le couple d'orifices 23A, 23B est reliée à travers les éléments de coupure interne à ce disjoncteur à la borne à vis à laquelle donne accès l'orifice 21 tandis que la double borne à insertion à laquelle donne accès les orifices 22A et 22B est relié à travers les éléments de protection interne au disjoncteur à la borne à vis commandée par l'orifice de gauche 20.

Dans d'autres variantes non représentées, la double borne telle que 24 et 32, dans laquelle les deux pinces individuelles et le pavé de montage et de raccordement sont faits d'une seule pièce, est remplacée par deux bornes indépendantes immobilisées individuellement et reliées électriquement l'une à l'autre, par exemple par une piste conductrice ou par une tresse ; et/ou les bornes sont conformées différemment, par exemple avec les pinces telles que 25A et 25B qui sont fortement dissymétriques ou dans une autre matière.

Dans encore d'autres variantes non représentées, d'autres types d'appareils modulaires présentent dans leur face supérieure des couples d'orifices tels que 22A, 22B, par exemple un coupe-circuit à fusible ; le nombre d'appareils d'une rangée est différent et en conséquence le nombre de dents des peignes est différent, les peignes tels que 40 et 41 présentant par exemple 12 dents ; un autre type de peigne multipolaire est employé, par exemple un peigne tétrapolaire dont les dents sont disposées comme les dents des peignes 40 et 41 tels qu'illustrés sur la figure 4 ou encore un peigne tripolaire tel que 111 mais sans la dent prévue pour être introduite dans l'orifice tel que 145N et sans la rangée de dents arrière, un peigne conventionnel, semblable aux peignes 40 et 41 étant prévu pour répartir horizontalement le pôle de neutre ; les appareils d'extrémité tels que 51 ou 121 sont disposés à droite plutôt qu'à gauche ; et/ou les peignes de répartition horizontale sont disposés sur une autre face des appareils, par exemple la face inférieure ou la face arrière.

## Revendications

1. Ensemble de distribution pour installation électrique, comportant :
- au moins un peigne (40, 41 ; 111) de répartition horizontale comportant au moins une rangée de dents (43 ; 155) disposées suivant un pas égal à une distance prédéterminée, dite module ; et
- une pluralité d'appareils électriques au format modulaire, chacun à forme globalement parallélépipédique avec deux faces principales (12) et des faces latérales (13-16) s'étendant de l'une à l'autre des faces principales (12), avec une largeur, c'est-à-dire l'écart entre les deux faces principales (12), égale à un nombre entier de dit(s) module(s), et avec l'une desdites faces latérales (16) qui présente un orifice donnant accès à une borne adaptée à recevoir une dent (43 ; 155) dudit peigne (40, 41 ; 111) alors disposé suivant une direction gauche-droite ;
**caractérisé en ce que** ladite pluralité d'appareils comporte au moins deux appareils (10, 54, 56 ; 125, 127) d'une largeur de 1 module, chacun muni d'un couple (24) de deux dites bornes, électriquement au même potentiel et disposées côte-à-côte, un dit orifice (22A, 22B ; 80A, 80B) étant prévu individuellement pour chaque borne dudit couple (24), lesquels orifices individuels sont alignés suivant ladite direction gauche-droite et sont disposés, tant les uns par rapport aux autres que vis-à-vis de l'une et de l'autre des faces principales (12), de sorte que si l'on forme avec lesdits appareils à 1 module (10, 54, 56 ; 125, 127) une rangée où ils sont disposés face principale (12) contre face principale (12) sauf pour deux dits appareils à 1 module qui sont distants de 0,5 module entre faces principales, ledit peigne (40, 41 ; 111) peut être mis en place dans ladite rangée, certains appareils à 1 module recevant une dent dans un dit orifice individuel donnant accès à une borne située à gauche dans ledit couple (24) et les autres appareils dans un dit orifice individuel donnant accès à une borne située à droite dans ledit couple (24) ;
au moins un dit appareil à 1 module (10, 56; 125) comportant à l'arrière dudit couple d'orifices (22A, 22B), un couple d'orifices supplémentaires (23A, 23B) donnant accès à un couple supplémentaire (33) de bornes disposées côte-à-côte et électriquement au même potentiel, ledit couple (24) et ledit couple supplémentaire (32) constituant deux bornes d'entrée pour un pôle respectif d'une source de courant alternatif.

2. Ensemble selon la revendication 1, **caractérisé en ce que** pour au moins un dit appareil à 1 module (10, 54, 56 ; 125, 127), lesdites deux bornes dudit couple (24) comportent chacune une pince individuelle (25A, 25B) comportant chacune un tronçon intermédiaire (30C) raccordé à l'autre pince individuelle par un pontet (28 ; 34).

3. Ensemble selon la revendication 2, **caractérisé en ce qu'**à chaque pince individuelle (25A, 25B) est associé un ressort (26A, 26B).

4. Ensemble selon l'une quelconque des revendications 2 ou 3, **caractérisé en ce que** chaque dite pince individuelle (25A, 25B) est en forme générale de lyre et est associée à un ressort (26A, 26B) à forme générale en C l'entourant étroitement.

5. Ensemble selon l'une quelconque des revendications 1 à 4, **caractérisé en ce que** pour au moins un dit appareil à 1 module (10, 54, 56 ; 125, 127), ledit couple est formé par une double borne (24) comportant un ensemble monobloc formé par une double pince (25) et par un pavé de montage et de raccordement (27).

6. Ensemble selon l'une quelconque des revendications 1 à 5, **caractérisé en ce que** ledit couple d'orifices (22A, 22B) et ledit couple d'orifices supplémentaires (23A, 23B) sont disposés l'un derrière l'autre avec un simple décalage vers l'arrière, sans décalage selon une direction gauche-droite.

7. Ensemble selon l'une quelconque des revendications 1 à 6, **caractérisé en ce que** ledit appareil forme un disjoncteur bipolaire (10, 56 ; 125).

8. Ensemble selon l'une quelconque des revendications 1 à 7, **caractérisé en ce que** ladite pluralité d'appareils comporte, en outre desdits appareils à 1 module (10, 54, 56 ; 125, 127), au moins un appareil (123) d'une largeur d'au moins 2 modules et comportant autant de couples (24) de deux dites bornes que sa largeur comporte de modules, un dit orifice (150A, 150B, 151A, 151B, 152A, 152B) étant prévu individuellement pour chaque borne de chaque dit couple (24), lesquels orifices individuels sont alignés suivant ladite direction gauche-droite et sont disposés tant les uns par rapport aux autres que vis-à-vis de l'une et l'autre des faces principales, de sorte que si l'on forme avec lesdits appareils à 1 module (10, 54, 56 ; 125, 127) et avec ledit appareil à au moins 2 modules (123) une rangée où ils sont disposés face principale (12) contre face principale (12), sauf pour deux dits appareils à 1 module ou à au moins 2 modules qui sont distants de 0,5 module entre faces principales, ledit peigne (10, 41 ; 111) peut être mis en place dans ladite rangée, certains appareils à 1 module ou à au moins 2 modules recevant une dent dans un dit orifice individuel donnant accès à une borne située à gauche dans ledit couple (24) et les autres appareils dans un dit orifice individuel donnant accès à une borne située à droite dans ledit couple (24).

9. Ensemble selon la revendication 8, **caractérisé en ce que** ledit appareil (123) à au moins 2 modules comporte trois couples de dits orifices (150A, 150B, 151A, 151B, 152A, 152B) ainsi qu'un couple d'orifices supplémentaires (153A, 153B), situé en arrière desdits trois couples, donnant accès à un couple supplémentaire de bornes électriquement au même potentiel et disposées côte-à-côte.

10. Ensemble selon la revendication 9, **caractérisé en ce que** ledit appareil (123) à au moins 2 modules comporte en outre une ouverture allongée (154) alignée avec ledit couple d'orifices supplémentaires (153A, 153B).

11. Ensemble selon l'une quelconque des revendications 8 à 10, **caractérisé en ce que** ledit appareil forme un disjoncteur tétrapolaire (123).

12. Ensemble selon l'une quelconque des revendications 1 à 11, **caractérisé en ce qu'**il comporte, en outre de ladite pluralité d'appareils au format modulaire, au moins un appareil (52, 53, 55 ; 122, 124, 126), ayant une largeur égale à un nombre entier de fois 0,5 module et comportant un creux (70, 73) adapté à loger au moins une dent (43 ; 155) dudit peigne (40, 41 ; 111) de sorte que si l'on forme ladite rangée également avec ledit appareil à un nombre entier de fois 0,5 module, ledit peigne (40, 41 ; 111) peut être mis en place dans cette rangée.

13. Appareil selon la revendication 12, **caractérisé en ce que** ledit appareil à nombre entier de fois 0,5 module est un auxiliaire (52, 55 ; 122, 124) ayant une largeur de 0,5 module.

14. Ensemble selon la revendication 12, **caractérisé en ce que** ledit appareil à un nombre entier de fois 0,5 module est un télérupteur (53 ; 56) ayant une largeur de 1 module.

15. Ensemble selon l'une quelconque des revendications 1 à 14, **caractérisé en ce qu'**il comporte, en outre de ladite pluralité d'appareils électriques au format modulaire, au moins un appareil électrique d'extrémité (51 ; 90 ; 121 ; 201) adapté à recevoir des dents d'extrémité (43 ; 155) dudit peigne (40, 41 ; 111).

16. Ensemble selon la revendication 15, **caractérisé en ce que** ledit appareil d'extrémité (51 ; 90) comporte un couple d'orifices (62A, 62B ; 95A, 95B) donnant accès à un couple de bornes électriquement au même potentiel et disposées côte-à-côte, lesquels orifices (62A, 62B ; 95A, 95B) sont disposés l'un par rapport à l'autre et vis-à-vis d'au moins une face principale, de façon semblable aux dits orifices (22A, 22B ; 80A, 80B) des dits appareils à 1 module (10, 54, 56 ; 125, 127).

17. Ensemble selon la revendication 16, **caractérisé en ce que** ledit appareil d'extrémité (51 ; 90) présente un couple d'orifices supplémentaires (63A, 63B ; 96A, 96B) donnant accès à un couple supplémentaire de bornes électriquement au même potentiel et disposées côte-à-côte.

18. Ensemble selon la revendication 17, **caractérisé en ce que** ledit couple d'orifices (62A, 62B ; 95A, 95B) et ledit couple d'orifices supplémentaires (63A, 63B ; 96A, 96B) sont disposés l'un derrière l'autre avec un simple décalage vers l'arrière, sans décalage selon une direction gauche-droite.

19. Ensemble selon l'une quelconque des revendications 16 à 18, **caractérisé en ce que** ledit appareil d'extrémité forme un interrupteur différentiel (51).

20. Ensemble selon l'une quelconque des revendications 16 à 18, **caractérisé en ce que** ledit appareil d'extrémité forme un adaptateur (90) de raccordement par peigne (40, 41) présentant une semelle (92) saillant de l'une de ses faces principales en partie inférieure et munie de dents (93, 94) prévues pour être introduite dans des bornes à vis situées en partie inférieure d'un autre appareil.

21. Ensemble selon l'une quelconque des revendications 15 à 17, **caractérisé en ce que** ledit appareil d'extrémité (51 ; 90; 201) comporte une cloison saillante d'isolement (64 ; 97 ; 208) à proximité des orifices (62A, 62B, 63A, 63B ; 95A, 95B, 96A, 96B ; 160A, 160B, 160C, 160N) de réception des dites dents d'extrémité (43 ; 155) dudit peigne (40, 41 ; 111).

## Patentansprüche

1. Verteilereinheit für Elektroinstallation mit:
- wenigstens einer Kammschiene (40, 41; 111) zur horizontalen Verteilung, die wenigstens eine Reihe Stifte (43; 155) umfasst, die mit einem Abstand angeordnet sind, der einem vorbestimmten, als Modul bezeichneten Abstand entspricht; und
- einer Vielzahl elektrischer Installationsgeräte im modularen Format mit jeweils allgemein parallelepipedischer Form mit zwei Hauptstirnseiten (12) und Seitenflächen (13-16), die von einer Hauptstirnseite (12) zur anderen verlaufen, mit einer Breite, das heißt einem Abstand zwischen den beiden Hauptstirnseiten (12), die einer ganzen Zahl des Moduls/der Module entspricht, und wobei eine der Seitenflächen (16) eine Öffnung aufweist, die Zugang zu einer Anschlussklemme gewährt, die einen Stift (43; 155) der Kammschiene (40, 41; 111) aufzunehmen vermag, die somit in einer Links-Rechts-Richtung angeordnet ist;
**dadurch gekennzeichnet, dass** die Vielzahl der Geräte wenigstens zwei Geräte (10, 54, 56; 125, 127) mit einer Breite von einem Modul umfasst, die jeweils mit einem aus zwei Anschlussklemmen bestehenden Paar (24) versehen sind, die elektrisch das gleiche Potenzial haben und nebeneinander angeordnet sind, wobei eine Öffnung (22A, 22B; 80A, 80B) einzeln für jede Anschlussklemme des Paars (24) vorgesehen ist, die Einzelöffnungen in Links-Rechts-Richtung in einer Reihe angeordnet sind und sowohl bezüglich einander als auch gegenüber der einen und der anderen Hauptstirnseite (12) solchermaßen angeordnet sind, dass die Kammschiene (40, 41; 111) in der Reihe angebracht werden kann, wenn mit den Geräten mit einem Modul (10, 54, 56; 125, 127) eine Reihe gebildet wird, in der sie bis auf zwei Geräte mit einem Modul, die zwischen den Hauptstirnseiten 0,5 Module beabstandet sind, Hauptstirnseite (12) an Hauptstirnseite (12) angeordnet sind, wobei einige Geräte mit einem Modul einen Stift in der Einzelöffnung aufnehmen, die Zugang zu einer in dem Paar (24) links liegenden Anschlussklemme gewährt, und die anderen Geräte in einer Einzelöffnung, die Zugang zu einer in dem Paar (24) rechts liegenden Anschlussklemme gewährt,
wobei wenigstens ein Gerät mit einem Modul (10, 56; 125) hinter dem Öffnungspaar (22A, 22B) ein Paar zusätzlicher Öffnungen (23A, 23B) aufweist, die Zugang zu einem zusätzlichen Paar (33) Anschlussklemmen gewähren, die elektrisch das gleiche Potenzial haben und nebeneinander angeordnet sind, wobei das Paar (24) und das zusätzliche Paar (32) zwei Eingangs-Anschlussklemmen für einen jeweiligen Pol einer Wechselstrom-Quelle bilden.

2. Einheit nach Anspruch 1,
**dadurch gekennzeichnet, dass** die beiden Anschlussklemmen des Paars (24) wenigstens für ein Gerät mit einem Modul (10, 54, 56; 125, 127) jeweils eine Einzelklammer (25A, 25B) aufweisen, mit jeweils einem Mittelstück (30C), das durch einen Bügel (28; 34) mit der anderen Klemme verbunden ist.

3. Einheit nach Anspruch 2,
**dadurch gekennzeichnet, dass** jeder Einzelklammer (25A, 25B) eine Feder (26A, 26B) zugeordnet ist.

4. Einheit nach einem der Ansprüche 2 oder 3,
**dadurch gekennzeichnet, dass** jede Einzelklammer (25A, 25B) allgemeine gabelförmig ist und einer Feder (26A, 26B) zugeordnet ist, die allgemein C-förmig ist und diese eng umschließt.

5. Einheit nach einem der Ansprüche 1 bis 4,
**dadurch gekennzeichnet, dass** das Paar für wenigstens ein Gerät mit einem Modul (10, 54, 56; 125, 127) durch eine doppelte Anschlussklemme (24) gebildet ist, die eine einstückige Einheit umfasst, die von einer doppelten Klammer (25) und einer Montage- und Anschlussplatte (27) gebildet ist.

6. Einheit nach einem der Ansprüche 1 bis 5,
**dadurch gekennzeichnet, dass** das Öffnungspaar (22A, 22B) und das Paar zusätzlicher Öffnungen (23A, 23B) mit einem einfachen Versatz nach hinten, aber ohne Versatz in Links-Rechts-Richtung hintereinander angeordnet sind.

7. Einheit nach einem der Ansprüche 1 bis 6,
**dadurch gekennzeichnet, dass** das Gerät einen zweipoligen Leistungsschalter (10, 56; 125) bildet.

8. Einheit nach einem der Ansprüche 1 bis 7,
**dadurch gekennzeichnet, dass** die Vielzahl der Geräte außer den Geräten mit einem Modul (10, 54, 56; 125, 127) wenigstens ein Gerät (123) mit einer Breite von wenigstens zwei Modulen umfasst, das so viele Paare (24) mit zwei Anschlussklemmen aufweist, wie seine Breite Module umfasst, wobei eine Öffnung (150A, 150B, 151A, 151B, 152A, 152B) einzeln für jede Anschlussklemme des Paars (24) vorgesehen ist, die Einzelöffnungen in Links-Rechts-Richtung in einer Reihe angeordnet sind und sowohl bezüglich einander als auch gegenüber der einen und der anderen Hauptstirnseite solchermaßen angeordnet sind, dass die Kammschiene (10, 41; 111) in der Reihe angebracht werden kann, wenn mit den Geräten mit einem Modul (10, 54, 56; 125, 127) und mit den Geräten mit wenigstens zwei Modulen (123) eine Reihe gebildet wird, in der sie bis auf zwei Geräte mit einem Modul oder mit wenigstens zwei Modulen, die zwischen den Hauptstirnseiten 0,5 Module beabstandet sind, Hauptstirnseite (12) an Hauptstirnseite (12) angeordnet sind, wobei einige Geräte mit einem Modul oder mit wenigstens zwei Modulen einen Stift in einer Einzelöffnung aufnehmen, die Zugang zu einer in dem Paar (24) links liegenden Anschlussklemme gewährt, und die andere Geräte in einer Einzelöffnung, die Zugang zu einer in dem Paar (24) rechts liegenden Anschlussklemme gewährt.

9. Einheit nach Anspruch 8,
**dadurch gekennzeichnet, dass** das Gerät (123) mit wenigstens zwei Modulen drei Öffnungspaare (150A, 150B, 151A, 151B, 152A, 152B) sowie ein hinter den drei Paaren liegendes Paar zusätzlicher Öffnungen (153A, 153B) aufweist, die Zugang zu einem zusätzlichen Paar Anschlussklemmen gewähren, die elektrisch das gleiche Potenzial haben und nebeneinander angeordnet sind.

10. Einheit nach Anspruch 9,
**dadurch gekennzeichnet, dass** das Gerät (123) mit wenigstens zwei Modulen ferner eine längliche Öffnung (154) aufweist, die mit dem Paar zusätzlicher Öffnungen (153A, 153B) in einer Reihe angeordnet ist.

11. Einheit nach einem der Ansprüche 8 bis 10,
**dadurch gekennzeichnet, dass** das Gerät einen vierpoligen Leistungsschalter (123) bildet.

12. Einheit nach einem der Ansprüche 1 bis 11,
**dadurch gekennzeichnet, dass** sie zusätzlich zu der Vielzahl der Geräte im modularen Format wenigstens ein Gerät (52, 53, 55; 122, 124, 126) umfasst, das eine Breite hat, die einer ganzen Zahl aus dem 0,5 fachen von Modulen entspricht, und eine Vertiefung (70, 73) aufweist, die wenigstens einen Stift (43; 155) der Kammschiene (40, 41; 111) solchermaßen aufzunehmen vermag, dass die Kammschiene (40, 41; 111) in der Reihe angebracht werden kann, wenn die Reihe auch mit dem Gerät mit einer ganzen Zahl aus dem 0,5 fachen von Modulen gebildet ist.

13. Einheit nach Anspruch 12,
**dadurch gekennzeichnet, dass** das Gerät mit einer ganzen Zahl aus dem 0,5 fachen von Modulen ein Hilfsgerät (52, 55; 122, 124) mit einer Breite von 0,5 Modulen ist.

14. Einheit nach Anspruch 12,
**dadurch gekennzeichnet, dass** das Gerät mit einer ganzen Zahl aus dem 0,5 fachen von Modulen ein Fernschalter (53, 56) mit einer Breite von einem Modul ist.

15. Einheit nach einem der Ansprüche 1 bis 14,
**dadurch gekennzeichnet, dass** sie zusätzlich zu der Vielzahl elektrischer Installationsgeräte im modularen Format wenigstens ein elektrisches Installationsendgerät (51; 90; 121; 201) umfasst, das Endstifte (43; 155) der Kammschiene (40, 41; 111) aufzunehmen vermag.

16. Einheit nach Anspruch 15,
**dadurch gekennzeichnet, dass** das Endgerät (51; 90) ein Paar Öffnungen (62A, 62B; 95A, 95B) aufweist, die Zugang zu einem Paar Anschlussklemmen gewähren, die elektrisch das gleiche Potenzial haben und nebeneinander angeordnet sind, wobei die Öffnungen (62A, 62B; 95A, 95B) bezüglich einander und gegenüber wenigstens einer Hauptstirnseite in gleicher Weise angeordnet sind wie die Öffnungen (22A, 22B; 80A, 80B) der Geräte mit einem Modul (10, 54, 56; 125, 127).

17. Einheit nach Anspruch 16,
**dadurch gekennzeichnet, dass** das Endgerät (51; 90) ein Paar zusätzlicher Öffnungen (63A, 63B; 96A, 96B) aufweist, die Zugang zu einem zusätzlichen Paar nebeneinander angeordneter Anschlussklemmen mit gleichem Potenzial gewähren.

18. Einheit nach Anspruch 17,
**dadurch gekennzeichnet, dass** das Öffnungspaar (62A, 62B; 95A, 95B) und das zusätzliche Öffnungspaar (63A, 63B; 96A, 96B) mit einem einfachen Versatz nach hinten, aber ohne Versatz in Links-Rechts-Richtung hintereinander angeordnet sind.

19. Einheit nach einem der Ansprüche 16 bis 18,
**dadurch gekennzeichnet, dass** das Endgerät einen Fehlerstromschutzschalter bildet.

20. Einheit nach einem der Ansprüche 16 bis 18,
**dadurch gekennzeichnet, dass** das Endgerät einen Kammschienenanschlussadapter (40, 41) bildet, mit einem Sockel (92), der an einer der Hauptstirnseiten im unteren Teil vorspringt und mit Stiften (93, 94) versehen ist, die zum Einführen in Schraubklemmen vorgesehen sind, die im unteren Teil eines anderen Geräts angeordnet sind.

21. Einheit nach einem der Ansprüche 15 bis 17,
**dadurch gekennzeichnet, dass** das Endgerät (51; 90; 201) eine vorspringende Isolierwand (64; 97, 208) in der Nähe der Öffnungen (62A, 62B, 63A, 63B; 95A, 95B, 96A, 96B; 160A, 160B, 160C, 160N) zur Aufnahme der Endstifte (43; 155) der Kammschiene (40, 41; 111) aufweist.

## Claims

1. A distribution assembly for electrical installation, comprising:
- at least one horizontal distribution comb (40, 41; 111) comprising at least one row of teeth (43; 155) disposed at an even pitch at a predetermined spacing, known as module; and
- a plurality of electrical devices of module-related size, each being parallelepipedal in shape overall with two main faces (12) and lateral faces (13-16) extending from one to the other of the main faces (12), with a width, that is to say the distance between the two main faces (12), equal to an integer of said module(s), and with one of said lateral faces (16) which has an orifice giving access to a terminal adapted to receive a tooth (43; 155) of said comb (40, 41; 111) then disposed in a left-right direction;
**characterised in that** said plurality of devices comprises at least two devices (10, 54, 56; 125, 127) of a width of 1 module, each equipped with a pair (24) of two said terminals, electrically at the same potential and disposed side by side, one said orifice (22A, 22B; 80A, 80B) being provided individually for each terminal of said pair (24), which individual orifices are aligned in said left-right direction and are arranged, both one relative to the other and with regard to one and the other of the main faces (12), such that if said 1-module devices (10, 54, 56; 125, 127) are formed into a row where they are arranged main face (12) against main face (12) except for two said 1-module devices which are spaced by 0.5 module between main faces, said comb (40, 41; 111) may be positioned in said row, some 1-module devices receiving a tooth in a said individual orifice giving access to a terminal located on the left in said pair (24) and the other devices in a said individual orifice giving access to a terminal located on the right in said pair (24);
at least one said 1-module device (10, 56; 125) comprising to the rear of said pair of orifices (22A, 22B) a pair of additional orifices (23A, 23B) giving access to an additional pair (33) of terminals disposed side by side and electrically at the same potential, said pair (24) and said additional pair (32) constituting two input terminals for a respective pole of an alternating current source.

2. An assembly according to claim 1, **characterised in that** for at least one said 1-module device (10, 54, 56; 125, 127), said two terminals of said pair (24) each comprise an individual clip (25A, 25B) each comprising an intermediate portion (30C) connected to the other individual clip by a connecting bridge (28; 34).

3. An assembly according to claim 2, **characterised in that** each individual clip (25A, 25B) is associated with a spring (26A, 26B).

4. An assembly according to either one of claims 2 or 3, **characterised in that** each said individual clip (25A, 25B) takes the general shape of a lyre and is associated with a spring (26A, 26B) in the general shape of a C closely surrounding it.

5. An assembly according to any one of claims 1 to 4, **characterised in that** for at least one said 1-module device (10, 54, 56; 125, 127), said pair is formed by a double terminal (24) comprising a one-piece assembly formed by a double clip (25) and by a mounting and connecting plate (27).

6. An assembly according to any one of claims 1 to 5, **characterised in that** said pair of orifices (22A, 22B) and said pair of additional orifices (23A, 23B) are arranged one behind the other with a simple offset towards the rear, but with no offset in a left-right direction.

7. An assembly according to any one of claims 1 to 6, **characterised in that** said device forms a double-pole circuit-breaker (10, 56; 125).

8. An assembly according to any one of claims 1 to 7, **characterised in that** said plurality of devices comprises, in addition to said 1-module devices (10, 54, 56; 125, 127), at least one device (123) with a width of at least 2 modules and comprising as many pairs (24) of two said terminals as its width comprises modules, one said orifice (150A, 150B, 151A, 151B, 152A, 152B) being provided individually for each terminal of each said pair (24), which individual orifices are aligned in said left-right direction and are arranged both with regard one to the other and relative to one and the other of the main faces such that if a row is formed with said 1-module devices (10, 54, 56; 125, 127) and with said at least 2-module devices (123) in which they are arranged main face (12) against main face (12), except for two said 1-module or at least 2-module devices which are spaced by 0.5 module between main faces, said comb (10, 41; 111) may be positioned in said row, some 1-module or at least 2-module devices receiving a tooth in one said individual orifice giving access to a terminal located on the left in said pair (24) and the other devices in one said individual orifice giving access to a terminal located on the right in said pair (24).

9. An assembly according to claim 8, **characterised in that** said at least 2-module device (123) comprises three pairs of said orifices (150A, 150B, 151A, 151B, 152A, 152B) as well as a pair of additional orifices (153A, 153B), situated behind said three pairs, giving access to an additional pair of terminals electrically at the same potential and disposed side by side.

10. An assembly according to claim 9, **characterised in that** said at least 2-module device (123) further comprises an elongate opening (154) aligned with said pair of additional orifices (153A, 153B).

11. An assembly according to any one of claims 8 to 10, **characterised in that** said device forms a four-pole circuit-breaker (123).

12. An assembly according to any one of claims 1 to 11, **characterised in that** it comprises, in addition to said plurality of devices of module-related size, at least one device (52, 53, 55; 122, 124, 126) having a width equal to an integer of 0.5 times module and comprising a cavity (70, 73) suitable for accommodating at least one tooth (43; 155) of said comb (40, 41; 111) such that if said row is also formed with said device of an integer of 0.5 times module, said comb (40, 41; 111) may be positioned in this row.

13. A device according to claim 12, **characterised in that** said device of an integer of 0.5 times module is an auxiliary (52, 55; 122, 124) having a width of 0.5 module.

14. An assembly according to claim 12, **characterised in that** said device of an integer of 0.5 times module is a power contactor (53, 56) having a width of 1 module.

15. An assembly according to any one of claims 1 to 14, **characterised in that** it comprises, in addition to said plurality of electrical devices of module-related size, at least one end electrical device (51; 90; 121; 201) suitable for receiving end teeth (43; 155) of said comb (40, 41; 111).

16. An assembly according to claim 15, **characterised in that** said end device (51; 90) comprises a pair of orifices (62A, 62B; 95A, 95B) giving access to a pair of terminals electrically at the same potential and disposed side by side, which orifices (62A, 62B; 95A, 95B) are arranged, one with regard to the other and opposite to at least one main face, in a similar manner to said orifices (22A, 22B; 80A, 80B) of said 1-module devices (10, 54, 56; 125, 127).

17. An assembly according to claim 16, **characterised in that** said end device (51; 90) has a pair of additional orifices (63A, 63B; 96A, 96B) giving access to an additional pair of terminals electrically at the same potential and disposed side by side.

18. An assembly according to claim 17, **characterised in that** said pair of orifices (62A, 62B; 95A, 95B) and said pair of additional orifices (63A, 63B; 96A, 96B) are arranged one behind the other with a simple offset towards the rear, but with no offset in a left-right direction.

19. An assembly according to any one of claims 16 to 18, **characterised in that** said end device forms a differential switch (51).

20. An assembly according to any one of claims 16 to 18, **characterised in that** said end device forms a comb (40, 41) connection adaptor (90) having a base (92) projecting from one of its main faces at the lower part and provided with teeth (93, 94) intended for introduction into screw terminals situated at the lower part of another device.

21. An assembly according to any one of claims 15 to 17, **characterised in that** said end device (51; 90; 201) comprises a projecting insulating partition (64; 97; 208) in the vicinity of the orifices (62A, 62B, 63A, 63B; 95A, 95B, 96A, 96B; 160A, 160B, 160C, 160N) for receiving said end teeth (43; 155) of said comb (40, 41; 111).
